(19) Europäisches Patentamt
European Patent Office
Office européen des brevets

(11) **EP 3 010 165 A1**

(12) **EUROPEAN PATENT APPLICATION**

(43) Date of publication:
**20.04.2016 Bulletin 2016/16**

(51) Int Cl.:
*H04B 10/114* (2013.01)     *H04B 10/116* (2013.01)

(21) Application number: **14306664.5**

(22) Date of filing: **17.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Chen, Chung Shue**
  **91620 NOZAY (FR)**
• **Kumar, Vinod**
  **91620 NOZAY (FR)**

(74) Representative: **Loyer & Abello**
**9, rue Anatole de la Forge**
**75017 Paris (FR)**

(54) **Methods for designing receiver and transmitter modules**

(57)    The invention provides a method for designing a receiver module, comprising:
- computing a channel matrix **H** characterizing a relationship between the transmitted optical signal **x** and a plurality of detected signalsy, for a transmission system comprising a receiver module and at least one transmitter, such that: **y=Hx+w,** wherein **w** represents noise, the receivers being arranged regularly around the axis such that their centers are located at an intersection of a cylinder and a coaxial cone, and their normal directions are perpendicular to the cone,
- calculating a parameter as a function of **H,** and storing in a data repository the calculated parameter in association with an elevation angle,
selecting an elevation angle within the elevation angles stored in the data repository as a function of the associated calculated parameters.
    The invention also provides a method for designing a transmitter module.

FIG.3

**Description**

**Field of the invention**

The invention relates to the technical field of wireless optical communication systems.

**Background**

The use of multiple transmitters and receivers of a wireless communication system along with related signal processing is referred to as Multiple-Input Multiple-Output (MIMO) technology. MIMO can provide two forms of gains: multiplexing gain and diversity gain by defining multiple channels of transmission of the data stream to transmit.

Spatial multiplexing gain may be used with high Signal-to-Noise Ratio (SNR). In spatial multiplexing, a data stream to transmit is split in multiple independent data streams, each transmitted by a transmitter. The data streams are separated only in the spatial domain, but otherwise occupying the same temporal and frequency resources. A receiver module comprises multiple receivers. The data streams are combined in the receivers. The receiver module also comprises signal processing to separate the data streams.

Diversity gain, on the other hand, is realized by transmitting identical information separated in the spatial domain. Each transmitter in a set of different transmitters will transmit a same data stream. Diversity gain improves the robustness of the transmission in the case where the signal has low Signal-to-Noise Ratio (SNR), for example due to severe propagation loss, multi-user interference, etc.

In order to enjoy the benefits of multiple-input-multiple-output (MIMO) system, techniques for reducing correlation between the available multiple channels from a transmitter to a receiver are absolutely essential for achieving MIMO capacity gains. In indoor, visible light communication (VLC) systems usually uses white light emitting diodes (LEDs) as transmitters and benefits from a large and unregulated spectrum. Although the optical bandwidth for VLC is around 400 THz, the low switching speed of white LEDs limits the electrical bandwidth to several MHz only. It is therefore essential to employ highly spectrum efficient techniques, such as orthogonal frequency division multiplexing (OFDM) and multiple-input-multiple-output (MIMO) to achieve high data rates. Typically in an indoor illumination system, multiple LED's are set up, for example on the ceiling. These LEDs may be used to set up parallel transmission paths in a VLC system. The challenge for building an effective MIMO system is to reduce the channel correlation between elements of the MIMO channel matrix such that successful decoding of the parallel channels in the receiver can be done.

Receiver imaging lens with a detector array is widely used in optical systems but has several disadvantages, such as the large size of the array and the high complexity of the system. It is not suitable for mounting on small devices like smartphones.

**Summary**

In an embodiment, the invention provides a method for designing a receiver module, the method comprising:

- selecting an integer number higher than 1, and a receiver module dimension,
- selecting an elevation angle,
- computing a SIMO or MIMO channel matrix for a transmission system comprising a receiver module located in a receiving position and at least one transmitter located in a transmitting position for transmitting an optical signal, wherein
  the receiver module comprises the selected integer number of receivers each having a receiving surface and a field-of-view, each receiver being adapted for receiving the optical signal,
  the receivers of the receiver module being arranged around an axis of the receiver module such that the centers of the receiving surfaces are located at an intersection of a right circular cylindrical surface whose radius is equal to the selected receiver module dimension, and a cone surface coaxial with the cylinder surface,
  wherein the angle of the cone surface with respect to a plane perpendicular to the axis of the receiver module is equal to the elevation angle,
  wherein the normal direction to the receiving surfaces of the receivers are perpendicular to the cone surface, the field-of-view of the receivers being oriented outwardly to the cone surface,
  wherein the SIMO or MIMO channel matrix **H** characterizes a relationship between the optical signal x transmitted by the transmitter and a plurality of detected signals y detected by the receivers such that:

$$y=Hx+w,$$

wherein **w** represents random additive white Gaussian noise,

- determining the eigenvalues of the SIMO or MIMO channel matrix **H,** and,
- calculating a parameter as a function of the eigenvalues, wherein the parameter represents a performance estimate of a demultiplexed signal obtained from a combination of the received signals, and storing in a data repository the calculated parameter in association with the elevation angle,
  selecting a second elevation angle and iterating the method from the computing step,
  selecting an elevation angle within the elevation angles stored in the data repository as a function of the associated calculated parameters.

In an embodiment, the invention provides a method for designing a transmitter module, the method comprising:

- selecting an integer number higher than 1, and a transmitter module dimension,
- selecting an elevation angle,
- computing a MISO or MIMO channel matrix for a transmission system comprising a transmitter module located in a transmitting position and at least one receiver located in a receiving position for receiving an optical signal, wherein the transmitter module comprises the selected integer number of transmitters each having a transmitting surface and a lambertian emission order, each transmitter being adapted for transmitting the optical signal,
  the transmitters of the transmitter module being arranged around an axis of the transmitter module such that the centers of the transmitting surfaces are located at an intersection of a right circular cylindrical surface whose radius is equal to the selected transmitter module dimension, and a cone surface coaxial with the cylinder surface,
  wherein the angle of the cone surface with respect to a plane perpendicular to the axis of the transmitter module is equal to the elevation angle,
  wherein the normal direction to the transmitting surfaces of the transmitters are perpendicular to the cone surface,
  the emission direction of the transmitters being oriented outwardly to the cone surface,
  wherein the MISO or MIMO channel matrix **H** characterizes a relationship between the optical signal **x** transmitted by the transmitter and a plurality of detected signals y detected by the transmitters such that:

  **y=Hx+w,** wherein **w** represents random additive white Gaussian noise,

- determining the eigenvalues of the MISO or MIMO channel matrix **H,** and,
- calculating a parameter as a function of the eigenvalues, wherein the parameter represents a performance estimate of a demultiplexed signal obtained from a combination of the received signals, and storing in a data repository the calculated parameter in association with the elevation angle,
  selecting a second elevation angle and iterating the method from the computing step,
  selecting an elevation angle within the elevation angles stored in the data repository as a function of the associated calculated parameters.

According to embodiments, such methods can comprise one or more of the steps below.

In embodiments, the receiver module, respectively the transmitter module, further comprises an additional receiver,
whose normal direction to the receiving surface, passing through the center of the receiving surface, defines the axis of the receiver module,
the field-of-view of the first receiver extending in the direction of the oriented axis,
the cylinder surface growing in the opposite direction to the field-of-view of the additional receiver,
the receiving surface of the additional receiver being in the plane perpendicular to the axis of the receiver module,
respectively an additional transmitter,
whose normal direction to the transmitting surface, passing through the center of the transmitting surface, defines the axis of the transmitter module,
the emission direction of the first transmitter being in the direction of the oriented axis,
the cylinder surface growing in the opposite direction to the emission direction of the additional transmitter,
the transmitting surface of the additional transmitter being in the plane perpendicular to the axis of the transmitter module.

In embodiments the center of the additional receiver, respectively the additional transmitter, defines the apex of the cone.

In embodiments the methods further comprise: selecting a second receiving position, respectively transmitting position, and iterating the method from the step of computing and storing in a data repository the receiving position, respectively transmitting position, in association with the calculated parameter.

In embodiments, the receiver module dimension, respectively the transmitter module dimension, is in the same order of magnitude as, preferably lower or equal to three times, the diameter of the receiving surface of a receiver, respectively the transmitting surface of a transmitter.

In embodiments the performance estimate is selected in the following list: error parameter, the capacity of the transmission system, the bit-error-rate, the Q-factor.

In embodiments the methods further comprise selecting in the data repository the elevation angle which is associated to the highest performance estimate.

In embodiments the integer number is higher than 2 and the receivers, respectively the transmitters, which are arranged around the axis, are arranged regularly.

In embodiments the modulation of the modulated signal is selected in the following list:

- Pulse amplitude modulated PAM,
- Direct Current DC -biased Orthogonal frequency-division multiplexing OFDM,
- Asymmetrically clipped optical OFDM,
- Flip-OFDM,
- Unipolar OFDM,
- Position modulating OFDM,
- Pulse width modulation PWM with OFDM,
- On-off keying modulation OOK,
- Pulse position modulation PPM,
- Overlapping PPM OPPM,
- Inverted PPM I-PPM,
- Variable pulse-position modulation VPPM,
- Color shift keying CSK, and
- Hadamard coded modulation.

In embodiments the modulated signal comprises m-ary data, m being a positive integer number higher than 1.

In embodiments the SIMO, MISO or MIMO channel matrix H is defined by coefficients as follows:

$$h_{ij} = \frac{(m+1)A}{2\pi d_{ij}^2} \cos^m(\alpha_{ij}) \cos^k(\beta_{ij})$$

wherein the matrix is a M x N matrix for a transmission system comprising M transmitters and N receivers, wherein i denotes the i-th transmitter, wherein i is an integer taking values between 1 and M, and j denotes the j-th receiver, wherein j is an integer taking values between 1 and N, wherein m is the Lambertian emission order of the transmitters and k is the field-of-view coefficient of the receivers, and the angles $\alpha_{ij}$, $\beta_{ij}$ and $d_{ij}$ are the irradiance angle at transmitter j with respect to receiver i, the incident angle at receiver i with respect to transmitter j, and the distance between transmitter j and receiver i, respectively.

In embodiments the field-of-view of the receivers is comprised between 150° and 200°.

In embodiments the performance estimate selected is the bit-error rate BER, which is calculated as follows:

$$\text{BER}_{\text{SM}} = \frac{(K-1)}{R_H K} \sum_{l=1}^{R_H} \text{erfc}\left(\sqrt{\frac{3\lambda_l \log_2 K \ \text{SNR}_{\text{elec}}}{4(K-1)(2K-1)}}\right)$$

wherein K denotes the number of discrete amplitude values that the modulated signal can have, $\text{SNR}_{\text{elec}}$ is the average electrical signal-to-noise ratio per transmit antenna, $\lambda_l$ is the l-th eigenvalue of HH*, where H* is the conjugate transpose of H, and $R_H$ is the number of non-zero eigenvalues of H.

In an embodiment, the optical signal is a visible light optical signal. In another embodiment, the optical signal is an infrared optical signal.

In an embodiment, the invention provides a receiver module designed by the method according to claim 1.

In an embodiment, the invention provides a transmitter module designed by the method according to claim 2.

In an embodiment the invention provides an optical communication system comprising a receiver module designed by the method according to claim 1 arranged at a receiving position and a transmitter module designed by the method according to claim 2 arranged at a transmitting position, the receiving position being separated from the transmitting position by a distance lower than 100 m.

Aspects of the invention stem for the observation that a data stream to receive may be split in multiple independent data streams to receive by orienting in different direction the normal vectors of multiple PDs, all mounted on the same location, without spatial separation.

Thanks to this feature, the proposed receiver is suitable for mounting on small devices like smartphones and is easy to use.

Thanks to this feature, no imaging lens is required for the receiver module.

Aspects of the invention are based on the idea of proposing a VLC MIMO system using an angle oriented (AO) receiver module comprising multiple photodetectors (PDs) whose normal vectors are pointing towards different directions of optimized orientation. As a result, the incident angles from the same light emitting diode (LED) are different for different PDs at the receiver module and hence the channel correlation is significantly reduced.

Aspects of the invention are based on the idea of using angle diversity for the photodetectors (PDs) to achieve highly uncorrelated VLC MIMO channels.

Aspects of the invention are based on the idea of proposing a receiver module, which is a special case of angle diversity receivers and which has the property that the normal vectors of PDs are pointing to different directions.

Aspects of the invention stem for the observation that such a receiver module enable to reduce channel correlation without any requirement of imaging devices or spatial separation between the PDs. So, parallel data transmissions through MIMO channels can be achieved.

Aspects of the invention are based on the idea of proposing a receiver module which is small in size and suitable for handheld devices such as smartphones.

## Brief description of the drawings

These and other aspects of the invention will be apparent from and elucidated with reference to the embodiments described hereinafter, by way of example, with reference to the drawings.

Figure 1 is a schematic representation of the relative orientation of a LED and a photodetector.

Figure 2 is a schematic representation of a coordinate system.

Figure 3 is a schematic representation of a receiver module comprising 5 photodetectors whose normal vectors are represented.

Figure 4 is a top view of Figure 3.

Figure 5 is a schematic representation of the top view of a room in which several locations for a receiver module are tested with respect to the locations of 4 LEDs fixed on the ceiling.

Figure 6 is a graph showing the simulation curves and analytical curves of the bit-error-rate (BER) as a function of the electrical signal-to-noise-ratio ($SNR_{elec}$) for an embodiment of the invention compared to two other technologies, which are for the first other technology a receiver device in which the receivers are spatially separated, and for the second technology a receiver module using a link-blockage technology.

Figure 7 is a graph showing the required $SNR_{elec}$ for achieving a BER of $10^{-4}$ for a transmission, as a function of the horizontal orientation of the receivers for the three different technologies, located at the center of the room.

## Detailed description of the embodiments

In an embodiment, the invention comprises a method for designing a particular design of an optical wireless transmission system allowing an efficient transmission. In an embodiment, the optical wireless transmission system comprises a receiver device, or module, which comprises a plurality of receivers, for example 5, whose normal vectors are oriented in order to have an optimized angle-diversity. The optimization is performed by a method comprising the simulation of the system for different orientations, the calculation of transmission performance estimation, for example the bit-error rate, for each simulated orientation. The method further comprises the selection of the orientation providing the best transmission performance.

- Firstly, a model for calculating a BER for a MIMO system will be described.
- Secondly, an efficient receiver module design will be described. The model firstly described will be used to improve the module design.
- Finally, the efficiency of the selected receiver module design will be discussed and compared to other technologies.

Firstly, a model allowing calculating a BER for a Multiple-Input Multiple-Output (MIMO) wireless optical transmission system will be described. For example, the system performs an optical transmission from the ceiling of a room to a mobile phone in the room.

An optical signal is transmitted from a transmitter device to a receiver device, which is unipolar K-PAM (pulse amplitude modulation) modulated, where K denotes for the modulation size.

The transmitter device comprises a number M of white LED transmitters and the receiver device comprises a number N of Photodetectors (PDs), for example photodiodes. The system comprising the transmitter device and the receiver device is referred to as a MxN MIMO system. The PDs use direct detection, and the signals processed are real and positive.

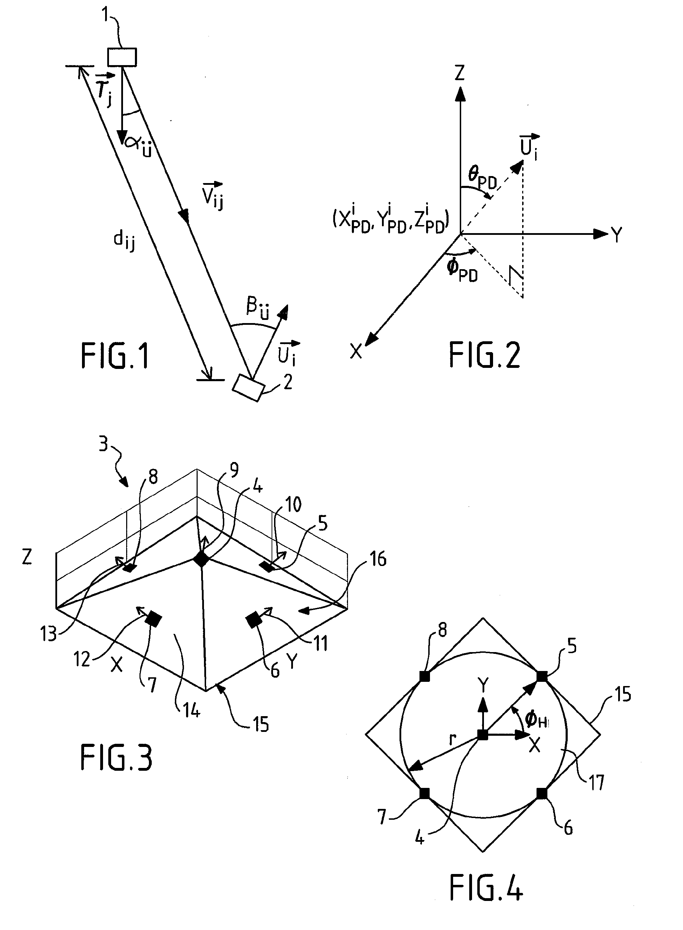

With reference to Figures 1 to 4, the method to calculate the bit-error-rate of such a system is described.

The noise in the detector is modeled as Additive White Gaussian Noise (AWGN) and is added to the signal in the electrical domain. Only direct line-of-sight (LOS) is assumed, i.e. an optical connection between a LED and a PD is considered as a straight line.

At first, the binary data is modulated in the electrical domain by a baseband unipolar K-PAM, where the $j^{th}$ modulated signal is denoted by $x_j$. The modulated transmit signal is parsed into a vector of length M, denoted by $x = [x_1, x_2, ..., x_M]^T$. Then $x_j$ is sent to a digital to analog converter to form $x_j(t)$, which is then represented as light intensity and transmitted by LED j. In the receiver device, the received signal from PD i is sent to the analog to digital converter to generate $y_i$ such that the received vector $y = [y_1, y_2, ..., y_N]^T$ is formed.

The transmit signal waveform x(t) from a LED for sending a message m can be represented as $x(t) = S_m \cdot p(t)$, for m=0, ..., K-1, where p(t) is a pulse of duration T and the signal amplitude Sm takes discrete values of Sm=m, for m=0, ..., K-1.

The energy of signal x(t) is equal to $\tau_m = \int_{-\infty}^{\infty} S_m^2 \, p^2(t) dt = m^2 \tau_p,$ where $\tau_p$ is the energy in p(t). The average energy of the PAM signal is given by

$$\tau_{avg} = \frac{\tau_p}{K} \sum_{m=0}^{K-1} m^2 = \frac{\tau_p}{6}(K-1)(2K-1).$$

Then the average energy per bit can be expressed as

$$\tau_{bavg} = \frac{\tau_p}{6 \log_2 K}(K-1)(2K-1).$$

When the Gray coding is employed, the minimum Euclidean distance between a pair of signal points, $d_{min}$, can be calculated as

$$d_{min} = \sqrt{\frac{6\tau_{bavg} \log_2 K}{(K-1)(2K-1)}}.$$

The geometrical relationship between a $j^{th}$ LED 1 and a $i^{th}$ PD 2 of the system will now be described with reference to Figure 1 in order to introduce a model enabling the calculation of the received vector y as a function of the transmit signal **x.**

The overall system can be written, with respect to the MIMO channel matrix model, as: **y = H x + w,** where **w** $= [w_1, w_2, ..., w_N]^T$ denotes a vector of independent and identically distributed AWGN random variables with $w_i \sim \mathcal{N}(0, \sigma_n^2)$, and **H** is the M x N channel matrix given by:

$$h_{ij} = \frac{(m+1)A}{2\pi d_{ij}^2} \cos^m(\alpha_{ij}) \cos^k(\beta_{ij})$$

where A is the area of the PDs, m is the Lambertian emission order, which is a constant parameter, which is given by m = -ln(2)/ ln(cos($\Phi^{1/2}$)), where $\Phi^{1/2}$ is the halfpower angle of the LED; and k is the field-of-view (FOV) coefficient of the PDs. Here, the angles $\alpha_{ij}$, $\beta_{ij}$ and $d_{ij}$ are respectively the irradiance angle at LED 1 with respect to PD 2, the incident angle at PD 2 with respect to LED 1, and the distance between LED 1 and PD 2, as depicted on Figure 1.

The three vectors $T_j$, $V_{ij}$ and $U_i$ are respectively the normal vector of the LED 1 in the direction of irradiance, the vector from the LED 1 to the PD 2, and the normal vector of the PD 2. The vectors may be used to find $\alpha_{ij}$ and $\beta_{ij}$ by vector dot product.

To successfully receive the transmit signal, correlation between the elements of channel matrix H needs to be low. High correlation between the wireless channel links may cause the channel matrix to be non-invertible and hence should be avoided in a MIMO system.

The BER of the $1^{th}$ parallel AWGN channel employing unipolar PAM is given by:

$$\mathrm{BER}_l \cong \frac{(K-1)}{K} \mathrm{erfc}\left(\frac{d_{min}\lambda_l}{2\sqrt{2\sigma_n^2}}\right)$$

where $\mathrm{erfc}(u) = \left(\frac{2}{\sqrt{\pi}}\right)\int_u^\infty e^{-t^2}dt,$ and $\lambda_1$ is the $1^{th}$ eigenvalue of HH*.

with $\lambda_1 \leq \lambda_2 \geq ... \geq \lambda_N$.

The theoretical BER of the MIMO system may be calculated by considering the multiplexed channels as parallel AWGN channels and get the average BER across the channels using $d_{min}$ and $\mathrm{BER}_1$ as

$$\mathrm{BER}_{SM} = \frac{(K-1)}{R_H K} \sum_{l=1}^{R_H} \mathrm{erfc}\left(\sqrt{\frac{3\lambda_l \log_2 K \, \mathrm{SNR}_{elec}}{4(K-1)(2K-1)}}\right)$$

where $\mathrm{SNR}_{elec} \triangleq \frac{\tau_{bavg}}{\sigma_n^2}$ is the average electrical signal-to-noise ratio (SNR) per transmitter, $\lambda_1$ is the 1-th eigenvalue of HH* (where H* is the conjugate transpose of H), and RH is the number of non-zero eigenvalues of H.

Further details about the model and calculations may be found in J. G. Proakis, Digital Communications, 5th ed. McGraw-Hill, 2008.

Secondly, the model above described is used in the following to determine an optimized configuration for a receiver module comprising multiple receivers, in order to have a good transmission performance.

According to an embodiment of the invention, the particular design of such a receiver module will be described. The coordinate system represented with reference to Figure 2 will be used to show the orientation of the normal vectors of the receivers of the receiver module. The normal vector of a receiver is the vector which is perpendicular to the receiving surface and which passes through the center of the receiving surface of the receiver. The same applies to a transmitter. The locations and the orientation of the LEDs and PDs are specified by the normal vectors represented in [x, y, z, $\varphi$, $\theta$] format, where (x, y, z) are the Cartesian coordinates of the originating position of a vector. $\theta$ in the range of [0,$\pi$] is the angle from the positive z-axis, referred to as the elevation angle. $\varphi$ in the range of [0, 2$\pi$] is the angle from the positive x-axis referred to as the azimuth angle. The normal vector $U_i$ of the $i^{th}$ PD of the transmission system is specified by the following coordinates: $\left[x_{PD}^i, y_{PD}^i, z_{PD}^i, \phi_{PD}^i, \theta_{PD}^i\right]$, as represented on Figure 2.

A receiver module design will now be proposed with reference to Figure 3. The orientation of the normal vector of a PD of the receiver module varies with respect to the orientation of the normal vector of another PD of the receiver module. Therefore, the incident angle $\beta_{ij}$ of an optical signal transmitted between the LED 1 to the PD 2 is different from the incident angles on the other PDs. Therefore, the channel gains from a given LED, for example LED 1, to the different angle-oriented PDs are different. The dimension of the receiver module is small. Therefore, the distance between each PD of the receiver module and a given transmitter is approximately the same. Thanks to the varying angle-oriented feature, such a design allows the receiver module to act as a multiple-output module even if the PDs are located in the same narrow area.

The design of the receiver module comprising N PDs is selected as follows:

- The N PDs are placed in close proximity of one another. Hence, the receiver module remains small in size. The $N^{th}$ PD is placed at the middle of the other PDs.
- The elevation angles of all PDs are equal to $\theta$ which is a parameter to be determined thanks to simulations and calculations of associated BER.

- The azimuth angle of a $i^{th}$ PD is equal to

$$\phi^i_{PD} = \frac{2(i-1)\pi}{N-1}$$

- The normal vector of the Nth PD has an elevation angle and an azimuth angle equal to zero.

With reference to Figure 3, an example of a receiver module with N = 5 is shown for the sake of illustration.

Following the above rules, the receiver module is represented as a pyramid 16. The pyramid has an equilateral (N-1)-gon base 15 where a PD 7 is mounted on each triangle face 14, except the base 15. The $N^{th}$ PD 4 is located at the center and faces upwards, i.e. the PD's normal 9 is perpendicular to the horizontal plane. The respective normal vectors 10, 11, 12 and 13 of the respective PDs 5, 6, 7 and 8 in the receiver module are therefore pointing to different directions.

With reference to Figure 4, the projected placement of PDs 4 to 8 in Figure 3 is represented on a horizontal plane.

In practical use, the receiver module may be rotated horizontally around its vertical axis by an angle $\varphi_H$ in the range of [0, 2π] so that the resulting azimuth angle of the $i^{th}$ PD for 1≤i≤N-1 will be equal to $(\varphi_{iPD} + \varphi_H)$, as depicted in Figure 4. The angle $\varphi_H$ is referred to as the horizontal rotation of the receiver module in the coordinate system of Figure 2.

In embodiments, $\varphi_H$ may be randomly determined or specifically calculated to optimize a receiver performance metric with respect to the locations of the transmitters.

As explained above with reference to Figures 3 and 4, the design of the receiver module is mainly determined by some parameters, which are:

- the number N of the PDs which are comprised in the receiver module, which fixes an incremental azimuth angle between the normal vectors of two adjacent PDs of the module. The incremental azimuth angle is equal to 2π/(N-1),
- the elevation angle, which is optimized by performing simulations of the BER of a transmission system having fixed locations for the transmitters and a fixed number N of the PDs of the receiver module, for different values of this elevation angle, by selecting the elevation angle which minimizes the BER.
- the dimension of the receiver module, which is the radius of the circle 17 represented on Figure 4.
- the horizontal rotation $\varphi_H$ of the receiver module in the room, with respect to the locations of the transmitters fixed on the ceiling.

For the sake of clarity, an example of optimization of the design of such a MIMO system is given below.

The receiver module is designed thanks to the above rules.

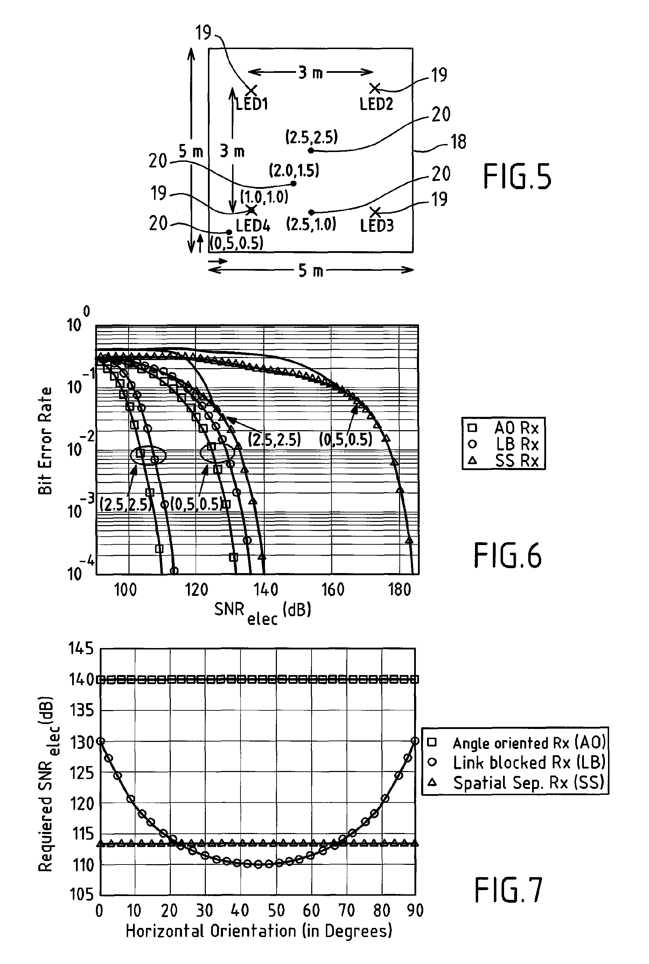

The transmission system is set up in a room 18 of 5m length x 5m width x 2.5 m height as depicted on Figure 5. The transmitters are LEDs. The receivers are PDs. The number M of LEDs is equal to 4 and the number N of PD in the receiver module is equal to 5. The four LEDs 19 are placed on the ceiling of the room in a square array, as depicted by the crosses. The center of the array is located at the center of the room, i.e., 2.5m, 2.5m. The location of a PD in the room will be denoted in the following by the coordinate couple (x,y). For example, the location of the center of the room is denoted (2.5, 2.5). All LEDs are simply oriented downwards, i.e. towards the ground. For comparison and analysis, five locations for the receiver module 20 are considered with coordinates (0.5, 0.5), (1.0, 1.0), (2.5, 1.0), (2.0, 1.5) and (2.5, 2.5). The locations are depicted by a circle. Due to the symmetry, these positions provide good insights for a large area.

Series of BER simulations are performed for each location of the receiver module corresponding to the coordinates (0.5, 0.5), (1.0, 1.0), (2.5, 1.0), (2.0, 1.5) and (2.5, 2.5).

For each single location, series of BER simulations are performed to determine the optimal horizontal rotation $\varphi_{Hopt}$ of the receiver module, which is the horizontal rotation $\varphi_H$ for which the required $SNR_{elec}$ for achieving a pre-defined BER is minimized.

For each single location, series of BER simulations are performed to determine the optimal elevation angle $\theta_{opt}$ of the receiver module, which is the elevation angle $\theta$ for which the required $SNR_{elec}$ for achieving a pre-defined BER is minimized.

The results of these simulations are summed up in Table 1 as follows:

TABLE 1: Optimum orientation angles for achieving a BER equal to $10^{-4}$ at the five positions in the room.

| Position | $\theta^{opt}$ | $\varphi_H^{opt}$ | $SNR_{elec}$ |
|---|---|---|---|
| (0.5, 0.5) | 70° | 40° | 132 dB |
| (1.0, 1,0) | 70° | 40° | 127 dB |
| (2.5, 1.0) | 70° | 40° | 122 dB |
| (2.0, 1.5) | 75° | 45° | 118 dB |
| (2.5, 2.5) | 75° | 45° | 110 dB |

For small elevation angles, the correlation in the channel matrix is high due to the lack of spatial separation between the PDs so that the performance is bad. The performance improves steadily until a certain elevation angle is reached. Increasing the angle beyond this angle generally deteriorates the BER performance due to the decrease of received power on the PDs. At the optimal elevation angle $\theta_{opt}$, the reduction of the received power due to angle inclination is compensated by the gain of small channel correlation.

For the sake of comparison, the efficiency of an optical MIMO system designed thanks to the invention is compared to the efficiency of two other technologies for optical MIMO system. The simulations are performed in an identical room, with an identical signal modulation, which is 4-PAM modulation.

The designs compared are respectively called Link Blockage (LB) and Spatial Separated (SS) designs. LB is a technology using non-imaging receivers. Induced LB receiver considers using an opaque boundary to block a particular link from an LED to a PD. SS consists in designing a receiver module comprising a plurality of receivers which are spatially separated from each other. For example, the receivers may be separated from each other by a distance equal to 20 cm. For the sake of simplicity, the receiver module above designed will be denoted AO Rx for Angle Oriented Receiver in the following.

The BER performance of the receiver module depicted on Figure 3, LB and SS receivers is compared. The AO Rx is designed with an elevation angle fixed to $\theta = 75$ degree and a horizontal rotation $\varphi_H = 45$ degree. The values for the elevation angle and horizontal rotation are selected in table 1 for the design of the receiver module in order to give the best BER performance around the center of the room and also give good performance at the other locations.

In the SS receiver, four PDs are placed as a 2x2 square array with each side equal to 20 cm. The 5th PD is placed at the center of the array. Compared to the receiver module denoted AO Rx for Angle Oriented receiver, the normal vectors of all the PDs of LB and SS receivers are always pointing upwards, i.e. simply towards the ceiling.

For the LB receiver, the link between the $i^{th}$ LED and the $(5-i)^{th}$ PD is blocked such that the (i, 5-i) coefficient of the MIMO channel matrix denoted $h_{i,(5-i)}$ is equal to zero, where $1 \leq i \leq 4$. However, such a requirement of link blockage is artificial and may not be easily implementable.

Figure 6 shows the performance comparison of AO, LB and SS receivers respectively denoted AO Rx, LB Rx and SS Rx at positions (0.5, 0.5) and (2.5, 2.5). The AO Rx has the configuration above tested, with N=5. The BER is represented as a function of $SNR_{elec}$ in dB. Simulation curves have been represented by lines and analytical curves by markers. SS Rx has much poorer BER performance compared to the other receivers in both positions due to the higher channel correlation, as depicted by the triangle markers. The proposed AO Rx has the best BER performance. For a BER of $10^{-4}$, the $SNR_{elec}$ improvement by the AO Rx compared to LB Rx is around 4 dB at both location, (0.5, 0.5) and (2.5, 2.5), respectively, as depicted by the square and round markers. The received power in the LB receiver is reduced due to blocking so that AO receiver performs better.

With reference to Figure 7, the required $SNR_{elec}$ for achieving a BER of the transmission equal to $10^{-4}$ at the center of the room, i.e. at coordinate (2.5 , 2.5) is simulated and plotted as a function of the horizontal orientation angle $\varphi_H$ of the AO Rx, while keeping the elevation angle $\theta$ of the AO Rx the same, i.e., $\theta = 75$ degree. At the center of the room, the horizontal rotation for AO Rx is symmetric for every 45 degree, due to the geometry of the receiver module. Therefore, it is sufficient to consider only $0 \leq \varphi_H \leq 90$ degree.

The required $SNR_{elec}$ for achieving a BER of the transmission equal to $10^{-4}$ at the center of the room is also plotted for the LB Rx and SS Rx. The required $SNR_{elec}$ of the AO Rx changes for different $\varphi_H$, whereas the variation in the required $SNR_{elec}$ for LB Rx and SS Rx is very small.

When the AO Rx is horizontally rotated, the incident angles of each channel on the receiving surfaces of the PDs are changed. When $\varphi_H = 0$ degree, the PDs of AO receiver do not point to the direction of any LED. This causes the received power significantly smaller compared to that when $\varphi_H = 45$ degree, where each PD points towards a particular LED. On the other hand, the horizontal rotation does not change the incident angles of PDs in LB receiver because the distances between the PDs and LEDs are much larger than the spatial separation among PDs in the LB Rx. The similar argument applies to the SS Rx.

The AO Rx designed according to an embodiment of the present invention performs much better than a compared SS Rx for all values of $\varphi_H$. The AO Rx also performs better for up to 4dB than the LB Rx for $\varphi_H$ in the range of (23, 67) degrees. Additionally, compared to the LB Rx, the AO Rx does not need to be re-calibrated from time to time when $\varphi_H$ is changed.

As an alternative, the $N^{th}$ PD, which is placed at the middle of the other PDs in the receiver module design above described, is removed.

The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1. A method for designing a receiver module, the method comprising:

   - selecting an integer number higher than 1, and a receiver module dimension (17),
   - selecting an elevation angle ($\theta_{PD}$),
   - computing a SIMO or MIMO channel matrix for a transmission system comprising a receiver module (2, 3) located in a receiving position (20) and at least one transmitter (1) located in a transmitting position (19) for transmitting an optical signal, wherein
   the receiver module (2, 3) comprises the selected integer number of receivers each having a receiving surface and a field-of-view, each receiver being adapted for receiving the optical signal,
   the receivers (4 to 8) of the receiver module being arranged around an axis of the receiver module such that the centers of the receiving surfaces are located at an intersection of a right circular cylindrical surface whose radius is equal to the selected receiver module dimension (17), and a cone surface coaxial with the cylinder surface,
   wherein the angle of the cone surface with respect to a plane perpendicular to the axis of the receiver module is equal to the elevation angle,
   wherein the normal direction to the receiving surfaces of the receivers are perpendicular to the cone surface, the field-of-view of the receivers being oriented outwardly to the cone surface,
   wherein the SIMO or MIMO channel matrix H characterizes a relationship between the optical signal x transmitted by the transmitter and a plurality of detected signals y detected by the receivers such that:

$$\mathbf{y=Hx+w,}$$

   wherein **w** represents random additive white Gaussian noise,
   - determining the eigenvalues of the SIMO or MIMO channel matrix **H,** and,
   - calculating a parameter as a function of the eigenvalues, wherein the parameter represents a performance estimate of a demultiplexed signal obtained from a combination of the received signals, and storing in a data repository the calculated parameter in association with the elevation angle,
   selecting a second elevation angle ($\theta_{PD}$) and iterating the method from the computing step,
   selecting an elevation angle ($\theta_{PD}$) within the elevation angles stored in the data repository as a function of the associated calculated parameters.

2. A method for designing a transmitter module, the method comprising:

   - selecting an integer number higher than 1, and a transmitter module dimension,
   - selecting an elevation angle,
   - computing a MISO or MIMO channel matrix for a transmission system comprising a transmitter module located in a transmitting position and at least one receiver located in a receiving position for receiving an optical signal, wherein
   the transmitter module comprises the selected integer number of transmitters each having a transmitting surface and a lambertian emission order, each transmitter being adapted for transmitting the optical signal,
   the transmitters of the transmitter module being arranged around an axis of the transmitter module such that the centers of the transmitting surfaces are located at an intersection of a right circular cylindrical surface whose radius is equal to the selected transmitter module dimension, and a cone surface coaxial with the cylinder surface, wherein the angle of the cone surface with respect to a plane perpendicular to the axis of the transmitter module is equal to the elevation angle,
   wherein the normal direction to the transmitting surfaces of the transmitters are perpendicular to the cone surface, the emission direction of the transmitters being oriented outwardly to the cone surface,
   wherein the MISO or MIMO channel matrix **H** characterizes a relationship between the optical signal x transmitted by the transmitter and a plurality of detected signals y detected by the transmitters such that:

   $$y = \mathbf{H}x + \mathbf{w}, \text{ wherein } \mathbf{w} \text{ represents random additive white Gaussian noise,}$$

   - determining the eigenvalues of the MISO or MIMO channel matrix **H**, and,
   - calculating a parameter as a function of the eigenvalues, wherein the parameter represents a performance estimate of a demultiplexed signal obtained from a combination of the received signals, and storing in a data repository the calculated parameter in association with the elevation angle,
   selecting a second elevation angle and iterating the method from the computing step,
   selecting an elevation angle within the elevation angles stored in the data repository as a function of the associated calculated parameters.

3. The method according to claim 1, respectively 2, wherein the receiver module, respectively the transmitter module, further comprises an additional receiver,
   whose normal direction to the receiving surface, passing through the center of the receiving surface, defines the axis of the receiver module,
   the field-of-view of the first receiver extending in the direction of the oriented axis, the cylinder surface growing in the opposite direction to the field-of-view of the additional receiver,
   the receiving surface of the additional receiver being in the plane perpendicular to the axis of the receiver module, respectively an additional transmitter,
   whose normal direction to the transmitting surface, passing through the center of the transmitting surface, defines the axis of the transmitter module,
   the emission direction of the first transmitter being in the direction of the oriented axis,
   the cylinder surface growing in the opposite direction to the emission direction of the additional transmitter,
   the transmitting surface of the additional transmitter being in the plane perpendicular to the axis of the transmitter module

4. The method according to claim 1, respectively 2, in which the center of the additional receiver (4), respectively the additional transmitter, defines the apex of the cone.

5. The method according to claim 1, respectively 2, further comprising: selecting a second receiving position (20), respectively transmitting position (19), and iterating the method from the step of computing and storing in a data repository the receiving position, respectively transmitting position, in association with the calculated parameter.

6. The method according to claim 1, respectively claim 2, wherein the integer number is higher than 2 and the receivers, respectively the transmitters, which are arranged around the axis, are arranged regularly.

7. The method according to claim 1, respectively claim 2, wherein the receiver module dimension (17), respectively the transmitter module dimension, is lower or equal to three times, the diameter of the receiving surface of a receiver, respectively the transmitting surface of a transmitter.

8. The method according to claim 1 to 7, wherein the performance estimate is selected in the following list: error parameter, the capacity of the transmission system, the bit-error-rate, the Q-factor.

9. The method according to claim 1 to 8, further comprising: selecting in the data repository the elevation angle ($\theta_{PD}$) which is associated to the highest performance estimate.

10. The method according to claim 1 to 9, wherein the SIMO, MISO or MIMO channel matrix H is defined by coefficients as follows:

$$h_{ij} = \frac{(m+1)A}{2\pi d_{ij}^2} \cos^m(\alpha_{ij}) \cos^k(\beta_{ij})$$

wherein the matrix is a M x N matrix for a transmission system comprising M transmitters and N receivers, wherein i denotes the i-th transmitter, wherein i is an integer taking values between 1 and M, and j denotes the j-th receiver, wherein j is an integer taking values between 1 and N, wherein m is the Lambertian emission order of the transmitters and k is the field-of-view coefficient of the receivers, and the angles $\alpha_{ij}$, $\beta_{ij}$ and $d_{ij}$ are the irradiance angle at transmitter j with respect to receiver i, the incident angle at receiver i with respect to transmitter j, and the distance between transmitter j and receiver i, respectively.

11. The method according to claim 1, wherein the field-of-view of the receivers (4 to 8) is comprised between 150° and 200°.

12. The method according to claim 1 to 11, wherein the performance estimate selected is the bit-error rate BER, which is calculated as follows:

$$\text{BER}_{\text{SM}} = \frac{(K-1)}{R_H K} \sum_{l=1}^{R_H} \text{erfc}\left(\sqrt{\frac{3\lambda_l \log_2 K \ \text{SNR}_{\text{elec}}}{4(K-1)(2K-1)}}\right)$$

wherein K denotes the number of discrete amplitude values that the modulated signal can have, $\text{SNR}_{\text{elec}}$ is the average electrical signal-to-noise ratio per transmit antenna, $\lambda_l$ is the $l$-th eigenvalue of HH*, where H* is the conjugate transpose of H, and $R_H$ is the number of non-zero eigenvalues of H.

13. A receiver module (2, 3) designed by the method according to claim 1.

14. A transmitter module (1) designed by the method according to claim 2.

15. An optical communication system comprising a receiver module (2, 3) designed by the method according to claim 1 arranged at a receiving position (20) and a transmitter module (1) designed by the method according to claim 2 arranged at a transmitting position (19), the receiving position being separated from the transmitting position by a distance lower than 100 m.

FIG.1

FIG.2

FIG.3

FIG.4

FIG.5

FIG.6

FIG.7

Europäisches
Patentamt

European
Patent Office

Office européen
des brevets

**EUROPEAN SEARCH REPORT**

Application Number

EP 14 30 6664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/297808 A1 (PAVELCHEK ANDREW [US]) 27 December 2007 (2007-12-27) * paragraphs [0041] - [0044], [0049] - [0051] * * figures 2,3 * | 1-15 | INV. H04B10/114 H04B10/116 |
| A | US 2014/248049 A1 (SAINT GEORGES ERIC [US]) 4 September 2014 (2014-09-04) * abstract * * paragraphs [0007], [0012], [0039], [0044] - [0046], [0050], [0063] - [0065] * * figures 3-5 * | 1-15 | |
| A,D | "CHAPTER 15: Multiple-Antenna Systems ED - Proakis J G; Salehi M" In: J G Proakis: "Digital Communications", 1 January 2008 (2008-01-01), DIGITAL COMMUNICATIONS (5TH EDITION), MCGRAW HILL, PAGE(S) 966 - 1027, XP009183623, ISBN: 0-07-295716-6 pages 966-1027, | 1-10 | |
| A | WO 2010/151484 A1 (ALCATEL LUCENT USA INC [US]; ESSIAMBRE RENE-JEAN [US]; RYF ROLAND [US]) 29 December 2010 (2010-12-29) * page 2, line 5 - page 4, line 21 * | 1-15 | TECHNICAL FIELDS SEARCHED (IPC) H04B H04J H04Q |

The present search report has been drawn up for all claims

| Place of search | Date of completion of the search | Examiner |
|---|---|---|
| Munich | 10 April 2015 | Hamer, Jeremy |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

...............................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 14 30 6664

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2015

| Patent document cited in search report | | Publication date | Patent family member(s) | | Publication date |
|---|---|---|---|---|---|
| US 2007297808 | A1 | 27-12-2007 | NONE | | |
| US 2014248049 | A1 | 04-09-2014 | US | 2014248049 A1 | 04-09-2014 |
| | | | WO | 2014137823 A1 | 12-09-2014 |
| WO 2010151484 | A1 | 29-12-2010 | CN | 102461021 A | 16-05-2012 |
| | | | EP | 2446560 A1 | 02-05-2012 |
| | | | JP | 5587467 B2 | 10-09-2014 |
| | | | JP | 2012533915 A | 27-12-2012 |
| | | | JP | 2013243682 A | 05-12-2013 |
| | | | KR | 20120040202 A | 26-04-2012 |
| | | | WO | 2010151484 A1 | 29-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. G. PROAKIS.** Digital Communications. Mc-Graw-Hill, 2008